# EUROPEAN PATENT SPECIFICATION

(11) **EP 1 911 996 B1**
(45) Date of publication and mention of the grant of the patent: **08.12.2010**
(21) Application number: 07254064.4
(22) Date of filing: 12.10.2007
(51) Int. Cl.: F16H 61/662

(54) **Continuously variable transmission and vehicle**
Stufenlos variables Getriebe und Fahrzeug
Transmission à variation continue et véhicule

(30) Priority: 13.10.2006 JP 2006280019; 06.09.2007 JP 2007231759
(43) Date of publication of application: 16.04.2008
(73) Proprietor: Yamaha Hatsudoki Kabushiki Kaisha, Shizuoka-ken Shizuoka 438-8501 (JP)
(72) Inventor: Asaoka, Ryousuke c/oYamaha Hatsudoki Kabushiki Kaisha, Shizuoka-ken 438-8501 (JP)
(74) Representative: Lamb, Martin John Carstairs

(56) References cited:
- EP-A- 0 890 764
- WO-A-2006/006506
- JP-A- 4 203 665
- US-A- 5 688 204
- US-B1- 6 671 602

## Description

### FIELD OF THE INVENTION

The present invention relates to a continuously variable transmission, and particularly to a continuously variable transmission suitable for being mounted to a vehicle, such as a straddle type vehicle.

### BACKGROUND TO THE INVENTION

V-belt type continuously variable transmissions are widely used for vehicles such as scooter type motorcycles. Such a V-belt type continuously variable transmission is structured with paired primary sheave and secondary sheave having grooves whose widths are variable and which are respectively mounted on a primary shaft to which an output of a drive power source such as an engine is inputted and a secondary shaft from which an output to a drive wheel is taken. A V-belt is wound around both of the sheaves and the groove widths of the respective sheaves may be changed by a groove width adjusting mechanism, thus adjusting wind diameters of the V-belt around the respective sheaves, permitting the gear ratio between both of the sheaves to be continuously adjusted.

Typically, each of the primary sheave and the secondary sheave is structured with a fixed flange and a movable flange which together form a V-groove therebetween, and the respective movable flanges are movably provided in an axial direction of the primary shaft or the secondary shaft. Thus, by moving the movable flanges by the groove width adjusting mechanism, the gear ratio can be continuously adjusted.

Conventionally, as one of these kinds of V-belt type continuously variable transmissions, there is one in which the movable sheave of the primary sheave for adjusting the groove width is moved by an electrically operated motor. Such a V-belt type continuously movable transmission can move the movable flange, using the moving thrust of the electrically operated motor, in both directions, i.e., in a direction in which the groove width is narrowed (in a Top gear range) and in another direction in which the groove width is widened (in a Low gear range). Accordingly, the groove width is freely adjustable. Such a V-belt type automatic continuously variable transmission is also applied to the straddle type vehicles (for example, motorcycles). Examples of V-belt transmissions of the type described herein are disclosed in, JP-B-3043061, JP-B-2950957 and JP-A-Sho 62-175228.

In the scooter type motorcycle having a mechanism which electronically controls the V-belt type automatic continuously variable transmission, the gear ratio is automatically changed without necessitating the rider's operation (see, for example, JP-A-Sho 62-175228). That is, predetermined programs (maps) are executed and the gear ratio is automatically changed based upon information such as vehicle speed, engine rotational speed, throttle position or the like. The automatic continuously variable transmission may be applied to various vehicle types to simplify rider operation.

It is known for motorcycles having automatic continuously variable transmissions which utilize electronic control to also include a speed reduction lever for inputting a rider's intention, wherein the gear ratio of the continuously variable transmission can be set in accordance with positions of the speed reduction lever (see, for example, JP-B-2950957) . Such motorcycles may also include a switch with which the gear ratio can be compulsorily changed or with which a shift down movement is manually made (see, for example, JP-A-Sho 62-175228).

According to such arrangements, any gear ratios can be freely and continuously obtained with the rider's intention while still utilizing the advantages of the automatic continuously variable transmission. Application of the engine brake to the driving and previous shift down movements thus can be made. The slow start of acceleration can be resolved, accordingly.

The inventors are in development of a V-belt type continuously variable transmission having a control program (kick down mode) with which a shift down movement in accordance with the rider's intention is realized. The inventors analyzed various running conditions regarding the V-belt type continuously variable transmission having the kick down mode. In the analyses, the inventors found a problem such that slips can occur between the primary sheave and the V-belt under a deceleration condition when the kick down mode is executed.

WO 2006/006506 discloses a speed change control device for a continuously variable transmission (CVT) used in a vehicle. The device is arranged to function in a. normal mode in which the CVT is controlled automatically. The device is capable of being switched to a kick down mode in which the CVT is configured to adopt a lower gear ration than when in the normal mode. The kick down mode is initiated at the discretion of a user by activation of a kick down switch.

US 6, 671, 602 discloses a method for stipulating the ratio of a CVT with a first, automatic operational mode and a second, manual operational mode in which the driver has direct intervention in the choice of ratio.

### SUMMARY OF THE INVENTION

According to a first aspect of the present invention, there is provided a continuously variable transmission according to claim 1.

In the kick down mode of the control device, the control target value is set to the Low gear range which is lower than the gear range in the normal mode.

The restriction value is a restriction value given in a throttle fully closed state.

The continuously variable transmission may further comprise a clutch which is disengaged at a preset speed, wherein the restriction value is set to be identical with the control target value set by the normal mode in the throttle fully closed state, in the vicinity of a vehicle speed at which the clutch is disengaged.

The kick down mode may comprise multiple stages at which control target values are sequentially set at Low gear positions lower than that in the normal mode.

The control device may be adapted to make a kick down control in which each stage of the kick down mode is set at one of the Low gear positions in the multiple stages of the kick down mode in response to the operation of the kick down operator.

When an associated throttle is in a fully closed state, the control device may restrict the kick down control when the control target value set by the kick down mode executed by the kick down control exists in a Low gear range more than the restriction value.

When an associated throttle is in a fully closed state, and when the control target value set by the kick down mode executed by the kick down control exists in a Low gear range more than the restriction value, the control device may restrict the kick down control and the gear ratio of the continuously variable transmission is controlled along the restriction value.

According to a second aspect of the present invention, there is provided a vehicle according to claim 7.

The vehicle may be a straddle type vehicle.

When an associated throttle is in a fully closed state, the restriction value may be set to be in a Top gear range more than the control target value set by the kick down mode, at a vehicle speed slower than a preset vehicle speed.

The vehicle may further comprise a clutch which is disengaged at a preset speed, wherein the restriction value may be set to be identical with the control target value set in the normal mode in the throttle fully closed state, in the vicinity of a vehicle speed at which the clutch is disengaged.

The kick down mode may comprise multiple stages at which control target values are sequentially set at Low gear positions lower than that in the normal mode.

The control device may be adapted to make a kick down control in which each stage of the kick down mode is set at one of the Low gear positions in the multiple stages of the kick down mode in response to the operation of the kick down operator.

When an associated throttle is in a fully closed state, the control device may restrict the kick down control when the control target value set by the kick down mode executed by the kick down control exists in a Low gear range more than the restriction value.

When an associated throttle is in a fully closed state, and when the control target value set by the kick down mode executed by the kick down control exists in a Low gear range more than the restriction value, the control device may restrict the kick down control and the gear ratio of the continuously variable transmission may be controlled along the restriction value.

A continuously variable transmission whose gear ratio is controlled by a control device may includes a kick down operator. A normal mode in which a control target value is set, a kick down mode in which the control target value is set to be in a Low gear range more than in the normal mode, and a restriction value given in a throttle fully closed state are provided in the control device. The control device controls the continuously variable transmission based upon the kick down mode in response to an operation of the kick down operator, and controls the continuously variable transmission not to vary to a Low gear range more than the restriction value given in the throttle fully closed state in the throttle fully closed state.

A straddle type vehicle may include an engine whose output is controlled in response to an operation of an acceleration operator, a continuously variable transmission connected to the engine, and a control device electronically controlling a gear ratio of the continuously variable transmission, and the straddle type vehicle including a kick down operator provided separately from the acceleration operator. A normal mode in which a control target value is set, a kick down mode in which the control target value is set to be in a Low gear range more than in the normal mode, and a restriction value given in a throttle fully closed state are provided in the control device. The control device controls the continuously variable transmission based upon the kick down mode in response to an operation of the kick down operator, and controls the continuously variable transmission not to vary to a Low gear range more than the restriction value given in the throttle fully closed state, in the throttle fully closed state.

The control device, for example, can control the continuously variable transmission along the restriction value given in the throttle fully closed state, when the kick down mode sets the control target value to the Low gear range more than the restriction value given in the throttle fully closed state, in the throttle fully closed state.

If the continuously variable transmission includes a clutch which is disengaged at a preset speed, the restriction value given in the throttle fully closed state is preferably set to be generally identical with the control target value set in the normal mode in the throttle fully closed state, in the vicinity of a vehicle speed at which the clutch is disengaged.

If multiple stages of the kick down mode at which control target values are sequentially set at Low gear positions lower than that in the normal mode are set, the control device sequentially executes each stage of the kick down mode set at one of the Low gear positions in the multiple stages of the kick down mode in response to the operation of the kick down operator (kick down control). In this situation, the control device can makes a control in which the kick down control is restricted, when the control target value set by the kick down mode executed by the kick down control exists in a Low gear range more than the restriction value given in the throttle fully closed state, in the throttle fully closed state.

If multiple stages of the kick down mode at which control target values are sequentially set at Low gear positions lower than that in the normal mode are set, the control device sequentially executes each stage of the kick down mode set at one of the Low gear positions in the multiple stages of the kick down mode in response to the operation of the kick down operator (kick down control). In this situation, the control device can makes a control in which the kick down control is restricted and the gear ratio of the continuously variable transmission is controlled along the restriction value given in the throttle fully closed state, when the control target value set by the kick down mode executed by the kick down control exists in a Low gear range more than the restriction value given in the throttle fully closed state, in the throttle fully closed state.

According to the straddle type vehicle or the continuously variable transmission, the normal mode, the kick down mode set to be in the Low gear range more than in the normal mode, and the restriction value given in the throttle fully closed state are provided in the target value setting section. The control device controls the gear ratio of the continuously variable transmission based upon the kick down mode provided in the target value setting section, in response to an operation of the kick down operator, and controls the gear ratio of the continuously variable transmission not to exceed the restriction value given in the throttle fully close state, in the throttle fully closed state. Thereby, the gear ratio of the continuously variable transmission in the throttle fully closed state can be properly controlled even under the condition that the kick down mode is executed. The problem that the slips occur between the primary sheave and the V-belt can thus be resolved.

### BRIEF DESCRIPTION OF THE DRAWINGS

These and other aspects of the present invention will now be described, by way of example only, with reference to the accompanying drawings, in which:
FIG. 1 is a block diagram showing a continuously variable transmission constructed in accordance with one embodiment of the present invention;
FIG. 2 is a side elevational view showing a straddle type vehicle constructed in accordance with one embodiment of the present invention;
FIG. 3 (a) shows a condition under which the continuously variable transmission of the one embodiment of the present invention is at a low gear position (Low), FIG. 3(b) shows a primary sheave thereof, and FIG. 3(c) shows a secondary sheave thereof;
FIG. 4 (a) shows a condition under which the continuously variable transmission of the one embodiment of the present invention is at a top gear position (Top), FIG. 4(b) shows the primary sheave thereof, and FIG. 4 (c) shows the secondary sheave thereof;
FIG. 5 shows a target value setting program (map) set in a control device of the continuously variable transmission of the embodiment of the present invention;
FIG. 6 is a flowchart showing a first control of the continuously variable transmission of the embodiment of the present invention;
FIG. 7 is a flowchart showing a second control of the continuously variable transmission of the embodiment of the present invention; and
FIG. 8 is a block diagram showing a continuously variable transmission of another embodiment of the present invention.

### DETAILED DESCRIPTION OF THE DRAWINGS

Hereunder, a continuously variable transmission mounted to a straddle type vehicle constructed in accordance with one embodiment of the present invention will be described referring to drawings. The present invention is not limited to the following embodiment.

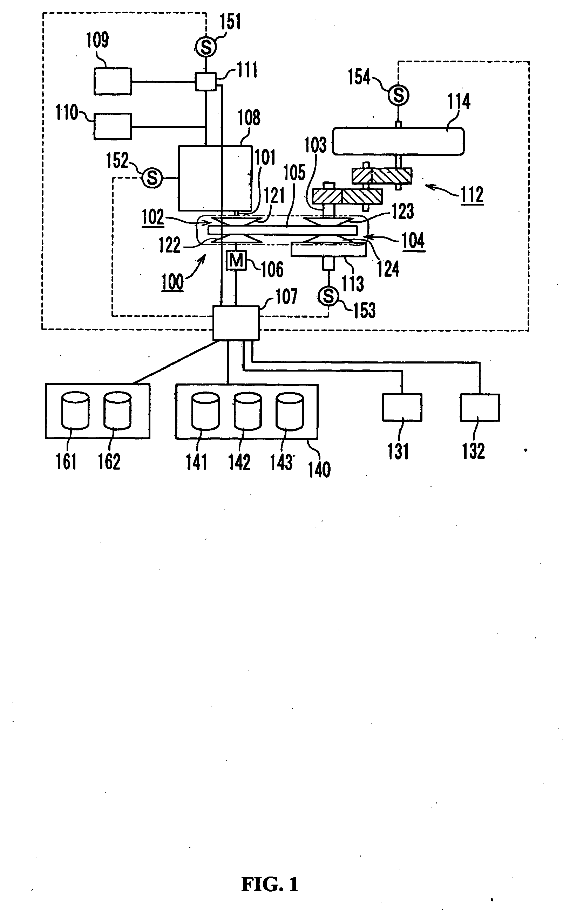

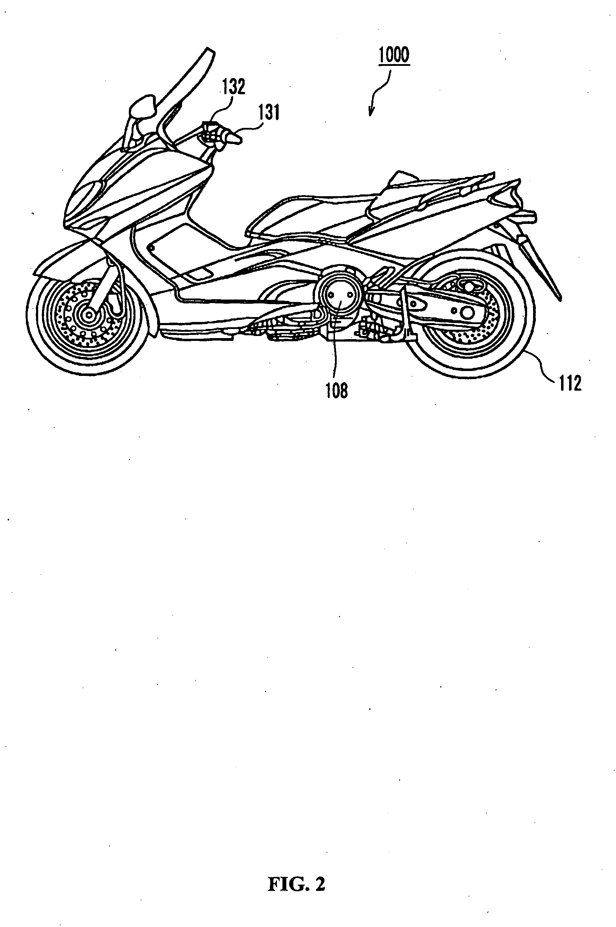

A general structure of the continuously variable transmission 100 is shown in FIG. 1. Incidentally, as shown in FIG. 1, the continuously variable transmission 100 is structured with a primary shaft 101 (crankshaft), a primary sheave 102, a secondary shaft 103, a secondary sheave 104, a V-belt 105, an actuator (motor) 106 and a control device 107. Also, as shown in FIG. 2, the continuously variable transmission 100 is mounted to a straddle type vehicle 1000. Reference numerals 108, 109, 110, 111, 112, 113 and 114 of FIG. 1 indicate an engine, a fuel tank, an intake box, a throttle valve, a speed reduction mechanism, a clutch and a drive wheel, respectively. In this embodiment, the driving force generated by the engine 108 is transmitted to the drive wheel (rear wheel) 114 through the continuously variable transmission 100 and the speed reduction mechanism 112. The clutch 113 is formed with a centrifugal clutch in this embodiment so that the driving power is not transmitted to the secondary shaft 103 from the continuously variable transmission 100 when a speed of the vehicle is slower than a generally constant vehicle speed under a deceleration condition.

As shown in FIG. 1, the continuously variable transmission 100 is structured with the primary sheave 102 mounted to the primary shaft 101, the secondary sheave 104 mounted to the secondary shaft 103 and the V-belt 105 wound around the primary sheave 102 and the secondary sheave 104.

The primary sheave 102 is formed with a fixed flange 121 and a movable flange 122. A groove width of the primary sheave 102 is adjusted by the motor 106 controlled by the control device 107. The secondary sheave 104 is formed with a fixed flange 123 and a movable flange 124, and a groove width thereof is adjusted to correspond to the groove width of the primary sheave 102 by the action of a spring (not shown) which is internally disposed.

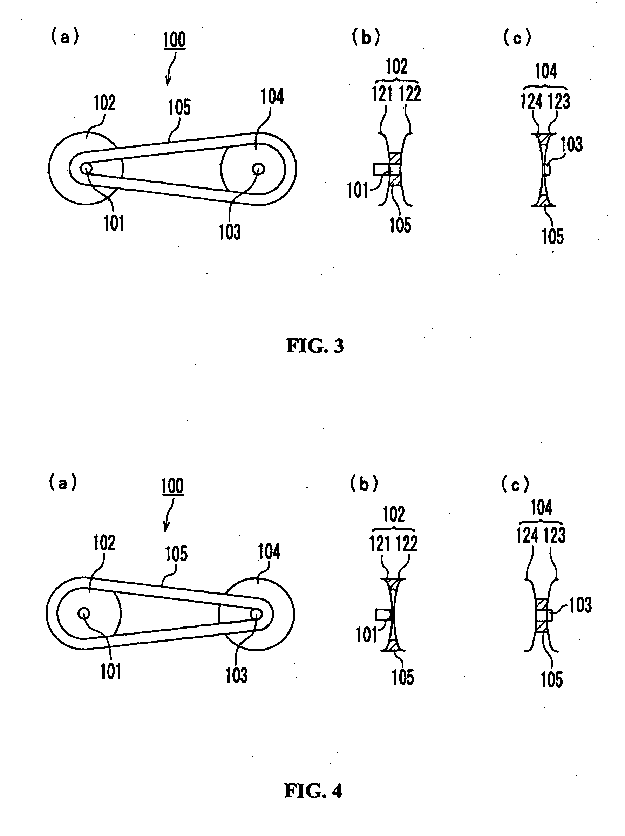

FIG. 3(a) shows the continuously variable transmission 100 in a low gear (Low) state. In the primary sheave 102, as shown in FIG. 3(b), a distance between the fixed flange 121 and the movable flange 122 is widened, and the V-belt 105 is positioned at an inner circumferential location of the primary sheave 102 (in the vicinity of the primary shaft 101) . In the secondary sheave 104, as shown in FIG. 3 (c), a distance between the fixed flange 123 and the movable flange 124 is narrowed, and the V-belt 105 is positioned at an outer circumferential location of the secondary sheave 104. Under this condition, the rotational velocity of the secondary shaft 103 is less than the rotational velocity of the primary shaft 101. The continuously variable transmission 100 thus is in a state such that relatively large driving force can be transmitted at a low speed.

FIG. 4(a) shows the continuously variable transmission 100 in a top gear (Top) state. In the primary sheave 102, as shown in FIG. 4 (b), the distance between the fixed flange 121 and the movable flange 122 is narrowed, and the V-belt 105 is positioned at the outer circumferential location of the primary sheave 102. In the secondary sheave 104, as shown in FIG. 4 (c), the distance between the fixed flange 123 and the movable flange 124 is widened, and the V-belt 105 is positioned at the inner circumferential location of the secondary sheave 104 (in the vicinity of the secondary shaft 103). Under this condition, the rotational velocity of the secondary shaft 103 is greater than the rotational velocity of the primary shaft 101. The continuously variable transmission 100 thus is in a state such that relatively small driving force can be transmitted at a high speed.

In the continuously variable transmission 100, the groove width of the primary sheave 102 is adjusted by being driven by the motor 106 so that the gear ratio is adjusted. The motor 106 operates in accordance with a target value setting program previously set or recorded in the control device 107. A kick down operation is an operation that realizes a shift down movement in accordance with the rider's intention. The kick down operation is achieved based upon a preset target value setting program (kick down mode).

The inventors found that slippage can occur between the primary sheave 102 and the V-belt 105 if deceleration is made when the kick down mode is executed, and made every effort to analyze causes thereof. As a result, the inventors identified the causes of the problem, which are set out below.

First, when the kick down mode is executed, the gear ratio of the continuously variable transmission 100 is set to be in a Low gear range in comparison with a state in which a normal mode is executed. When the gear ratio is set to be in the Low gear range, the groove width of the primary sheave 102 is widened (see FIG. 3(b)). In the Low gear range in which the groove width of the primary sheave 102 is wide as shown in FIG. 3 (b), action of force with which the primary sheave 102 pinches the V-belt 105 is small in comparison with that in the Top gear range in which the groove width of the primary sheave 102 is narrow as shown in FIG. 4(b). Also, under the deceleration condition, an accelerator is released and the throttle valve is closed. As shown in FIG. 1, in the throttle fully closed state, the torque is transmitted from the drive wheel 114 to the primary shaft 101 sequentially through the secondary shaft 103, the secondary sheave 104, the V-belt 105 and the primary sheave 102 to provide an engine brake action. In this regard, the term "throttle fully closed state" means the state in which the throttle valve of the engine is closed.

Accordingly, if the throttle valve is closed when the kick down mode is executed, the engine brake action is made. On this occasion, because of the engine brake action, a situation arises in which the action of the force with which the primary sheave 102 pinches the V-belt 105 is small in comparison with the torque transmitted to the primary shaft 101 from the drive wheel 114. The inventors concluded that such a phenomenon is a major cause of the slippage between the primary sheave 102 and the V-belt 105 under the deceleration condition.

Further, in the continuously variable transmission having the so-called multistage kick down mode in which multiple stages of the kick down mode are sequentially set at Low gear positions, the kick down mode can be further continuously executed when the deceleration is made by closing the throttle valve.

In this regard, when the kick down mode is executed, the groove width of the primary sheave 102 is further widened. An increased level of slippage between the primary sheave 102 and the V-belt 105 thus occurs. The inventors supposed that the cause of slippage between the primary sheave 102 and the V-belt 105 is as discussed above.

The phenomenon discussed above does not ruin the safety of straddle type vehicles. The inventors, however, thought that it was preferable to reduce slippage between the primary sheave 102 and the V-belt 105 caused by the phenomenon discussed above so as to enhance ride feeling for a rider, operability, stable running performance, etc.

The inventors made various modifications for reducing slippage between the primary sheave 102 and the V-belt 105 in connection with the continuously variable transmission 100 based upon the above analyses.

Hereunder, a modification of the continuously variable transmission in the one embodiment of the present invention will be described.

In this embodiment, the continuously variable transmission 100 is mounted to the straddle type vehicle 1000. As shown in FIG. 2, the straddle type vehicle 1000 has an acceleration operator 131 and a kick down operator 132.

The acceleration operator 131 is an operator with which the rider controls an output of the engine 108. In this embodiment, the acceleration operator 131 is formed with an accelerator or accelerator grip attached to handle bars. As shown in FIG. 1, the control device 107 controls an opening of the throttle valve 111 in response to an operation of the acceleration operator 131 to control the output of the engine 108.

The kick down operator 132 is an operator operated by the rider to execute the kick down mode that is set to be in the Low gear range more than in the normal mode. In this embodiment, the kick down operator 132 is provided separately from the acceleration operator 131. The kick down operator 132 is formed with a kick down button (KD button) having a button shape and is positioned at a location on the handle bars where the button is easily operated in consideration of the operability for the rider. The control device 107 executes the kick down mode in response to the operation of the kick down operator 132 by the rider.

As shown in FIG. 1, the continuously variable transmission 100 is connected to the engine 108 and is controlled by the control device 107. A normal mode in which a control target value is set, a kick down mode in which the control target value is set to be in a Low gear range more than in the normal mode, and a restriction value given in a throttle fully closed state are provided in the control device 107. In this embodiment, the control device 107 has a target value setting section 140 which sets the control target value. The normal mode, the kick down mode and a restriction value given in the throttle fully closed state are individually provided in the target value setting section 140.

Specifically, in this embodiment, the control device 107 is embodied with a microcomputer including a CPU, a ROM, a RAM, a timer, etc. and has a storage section storing data and programs and a processing section executing processes, such as a calculation process, in accordance with the programs. The target value setting section 140 is provided in the storage section of the control device 107.

In this embodiment, various sensors such as a throttle opening sensor 151, an engine rotation sensor 152, a secondary sheave rotation sensor 153 and a vehicle speed sensor 154 are attached to the straddle type vehicle 1000. The control device 107 is electrically connected to these sensors and obtains necessary information regarding various conditions of the straddle type vehicle from the respective sensors.

In those sensors, the throttle opening sensor 151 is a sensor which detects a throttle opening. In this embodiment, the throttle opening sensor 151 is positioned near a support shaft of the throttle valve 111 and detects a throttle opening which is a rotational angle of the throttle valve 111. The engine rotation sensor 152 is a sensor which detects an engine rotational speed. In this embodiment, the engine rotation sensor 152 is positioned near the crankshaft (primary shaft 101) of the engine 108 and detects an engine rotational speed. The secondary sheave rotation sensor 153 detects a rotational speed of the secondary sheave 104. In this embodiment, the secondary sheave rotation sensor 153 is positioned near the secondary shaft 103 and detects a rotational speed of the secondary sheave 104. The vehicle speed sensor 154 is a sensor which detects a running speed of the straddle type vehicle 100. In this embodiment, the vehicle speed sensor 154 is disposed on a drive axle of the drive wheel 114 and detects a rotational speed of the drive axle of the drive wheel 114. For example, the vehicle speed (running speed) of the straddle type vehicle 1000 is preferably calculated based upon the rotational speed of the drive axle of the drive wheel 114 detected by the vehicle speed sensor 154. Also, in this embodiment, a gear ratio of the continuously variable transmission 100 is calculated as a ratio of the engine rotational speed detected by the engine rotation sensor 152 to the vehicle speed of the straddle type vehicle 1000 detected by the vehicle speed sensor 154.

The target value setting section 140 is a section which sets a target value for controlling the continuously variable transmission 100 as described above. In this embodiment, the target value setting section 140 stores the normal mode 141, the kick down mode 142 and the restriction value 143 given in the throttle fully closed state.

In this embodiment, the normal mode 141 is a target value setting program which sets a control target value for controlling the continuously variable transmission 100 in a normal running state in which the kick down mode 142 is not executed. The kick down mode 142 is a target value setting program which sets a control target value for controlling the continuously variable transmission 100 to be in the Low gear range more than in the normal mode 141.

The respective target value setting programs provide the control target values based upon the information of the vehicle obtained from the throttle opening sensor 151, the engine rotation sensor 152, the secondary sheave rotation sensor 153, the vehicle speed sensor 154, etc. The control device 107 operates the motor 106 based upon the control target values to control the groove width of the primary sheave 102.

In this embodiment, the kick down mode 142 is a mode in which a control target value made by multiplying a gear shift characteristic (gear ratio) of the normal mode 141 by a constant rate is set. Specifically, by the kick down mode 142, a control target value made by multiplying the control target value of the engine rotational speed set in the normal mode 141 by a preset constant rate is set.

As the restriction value 143 given in the throttle fully closed state, a control target value of the continuously variable transmission 100 set in the throttle fully closed state is provided.

In this embodiment, the restriction value 143 given in the throttle fully closed state is previously decided in consideration of the effect that reduces slippage between the primary sheave 102 and the V-belt 105 of the continuously variable transmission 100 made by the engine brake action. The restriction value 143 given in the throttle fully closed state is not limited to the value. For example, as the restriction value 143 given in the throttle fully closed state, the control target value of the continuously variable transmission 100 can be set in consideration of assumption such that absolutely no slippage occurs between the primary sheave 102 and the V-belt 105 of the continuously variable transmission 100 by the engine brake action. Such a restriction value is preferably set in consideration of, for example, simulation results or results of actual vehicle tests.

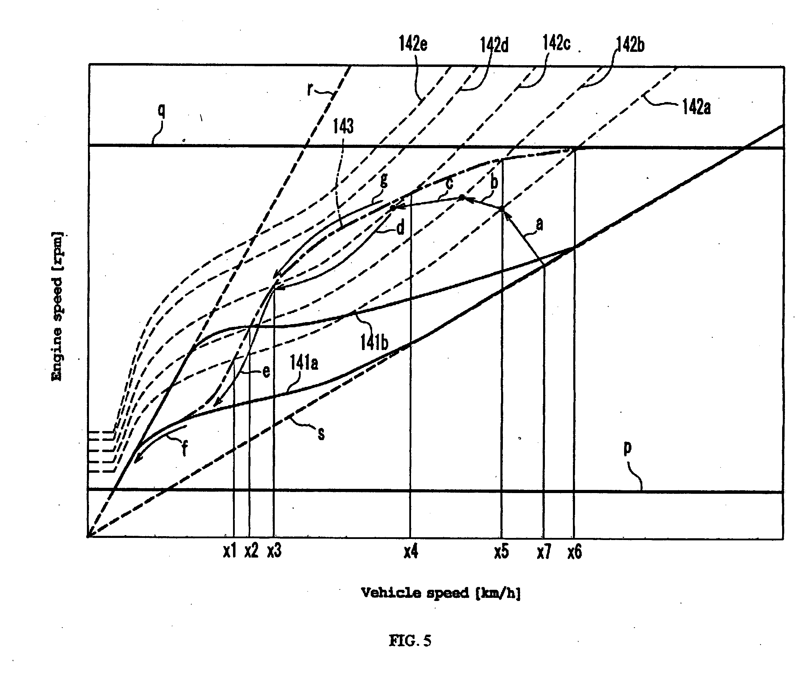

Regarding the normal mode 141, the kick down mode 142 and the restriction value 143 given in the throttle fully closed state all set in the target value setting section 140 in this embodiment, FIG. 5 shows their relationships with vehicle speeds and the speeds of the engine 108.

The vertical axis of FIG. 5 indicates the engine rotational speeds and the horizontal axis indicates the vehicle speeds. Also, reference symbol p indicates the lower limit of the engine rotational speed, while reference symbol q indicates the upper limit of the engine rotational speed. Reference symbol r in FIG. 5 indicates relationships between the vehicle speeds and the engine rotational speeds provided when the groove width of the primary sheave 102 is suitably set to the lowest position in the Low gear range, and reference symbol s indicates relationships between the vehicle speeds and the engine rotational speeds provided when the groove width of the primary sheave 102 is suitably set to the highest position in the Top gear range. The rotational speed of the engine 108 is detected (calculated) based upon, for example, a detection signal of the engine rotation sensor 152. The vehicle speed is detected (calculated) based upon, for example, a detection signal of the secondary sheave rotation sensor 153 or of the vehicle speed sensor 154.

Reference numeral 141a in FIG. 5 indicates control target values of the continuously variable transmission in the normal mode in the throttle fully closed state. Reference numeral 141b indicates control target values of the continuously variable transmission in the normal mode in a throttle fully open state. Also, reference numerals 142a-142e indicate control target values of the continuously variable transmission in the kick down mode in the throttle fully closed state. Reference numeral 143 indicates restriction values in the throttle fully closed state.

As shown in FIG. 5, in this embodiment, multiple stages (five stages in the depicted example) of the kick down mode (multistage kick down mode) are set. A first mode 142a of the kick down, a second mode 142b of the kick down, a third mode 142c of the kick down, a fourth mode 142d of the kick down and a fifth mode 142e of the kick down are sequentially set in the Low gear range. In FIG. 5, it is meant that, if the vehicle speeds are the same, the higher the engine rotational speed is, the lower the gear ratio of the continuously variable transmission is set. Also, it is meant that, if the engine rotational speeds are the same, the lower the vehicle speed is, the lower the gear ratio of the continuously variable transmission is set.

The control device 107 controls the continuously variable transmission 100 based upon the kick down mode 142 provided in the target value setting section 140, in response to the operation of the kick down operator 132. Also, in the throttle fully closed state, the control device 107 controls the continuously variable transmission 100 not to exceed the restriction value 143 given in the throttle fully closed state provided in the target value setting section 140. In order to execute the controls, as shown in FIG. 1, in this embodiment, the control device 107 has programs for executing a first control 161 and a second control 162.

The first control 161 controls the continuously variable transmission 100 along the restriction values 143 in the throttle fully closed state, when the kick down mode 142 sets control target values to the Low gear range more than the restriction values 143 in the throttle fully closed state, in the throttle fully closed state.

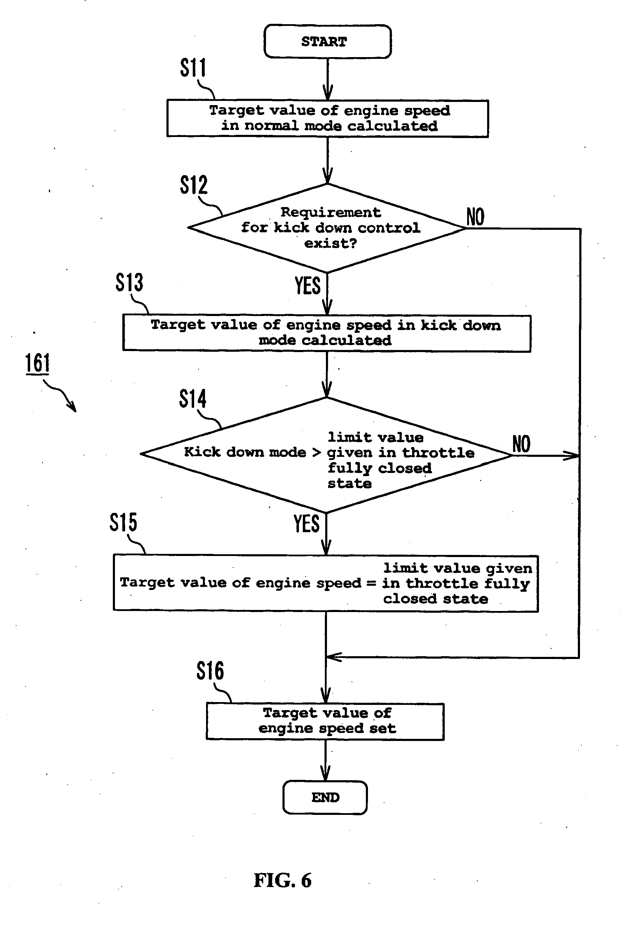

In this embodiment, as shown in FIG. 6, first, a control target value of the engine rotational speed is calculated based upon the normal mode 141a in the throttle fully closed state (S11). Next, it is determined whether any requirement of the kick down control given through the kick down operator 132 exists or not (S12). If no requirement of the kick down control given through the kick down operator 132 exists at the determination step (S12), the control target value of the engine rotational speed of the normal mode 141a in the throttle fully closed state is set to be the target value of the engine rotational speed (S16). If the requirement of the kick down control given through the kick down operator 132 exists at the determination step (S12), the control target value of the engine rotational speed is calculated based upon the kick down mode 142 (S13). The processes discussed above are the same as the normal kick down control.

As shown in FIG. 6, the first control 161 includes a determination step (S14). At the determination step (S14), it is determined whether or not the control target value of the engine rotational speed of the kick down mode 142 calculated at the step (S13) is greater than the control target value of the engine rotational speed within the restriction values 143 in the throttle fully closed state. In other words, at this determination step (S14), it is determined whether or not the kick down mode 142 sets the control target value of the continuously variable transmission 100 to the Low gear range more than the restriction value 143 given in the throttle fully closed state.

If, at the determination step (S14), it is determined that the target value of the kick down mode is greater than the limit value, a step (S15) is executed. At the step (S15), the restriction value 143 in the throttle fully closed state is set to be the control target value of the engine rotational speed. If it is determined at the determination step (S14) that it is not greater, a step (S16) is executed. In this situation, at the step (S16), the control target value of the engine rotational speed set by the kick down mode 142 is set to be the control target value of the engine rotational speed. That is, if it is determined to be YES at the determination step (S14), the restriction value 143 in the throttle fully closed state is set to be the control target value of the engine rotational speed (S15).

According to the first control 161, even though the kick down mode 142 is executed, the control target value of the continuously variable transmission 100 is set along the restriction values 143 in the throttle fully closed state under the condition that the kick down mode 142 sets the control target value to the Low gear range than the restriction value 143 in the throttle fully closed state, in the throttle fully closed state. As a result, the control target value of the continuously variable transmission 100 is not set to the Low gear range than the restriction value 143 in the throttle fully closed state. Therefore, slippage between the primary sheave 102 and the V-belt 105 under the deceleration condition can be reduced.

Next, the second control 162 will be described.

The second control 162 is employed when the multiple stages of the kick down mode 142 is set and the kick down control (multistage kick down control) in which each stage of the kick down mode 142 set at one of the Low gear positions in the multiple stages of the kick down mode 142 is sequentially executed in response to the operation of the kick down operator 132 is made.

The second control 162 restricts the kick down control when the control target value set by the kick down mode 142 executed in the kick down control is positioned in the Low gear range more than the restriction value 143 in the throttle fully closed state, in the throttle fully closed state.

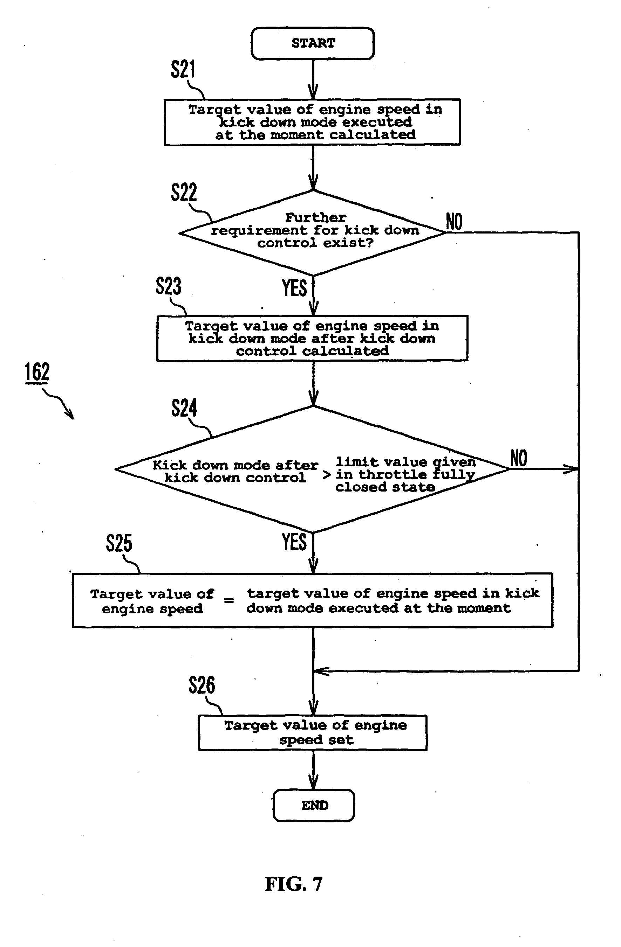

In this embodiment, the second control 162 is executed when the kick down operator 132 is further operated under the condition that the kick down mode is executed. The second control 162, first, as shown in FIG. 7, calculates a control target value of the engine rotational speed based upon the kick down mode that is executed (S21). Next, it is determined whether or not any further requirement of the kick down control given through the kick down operator 132 exists (S22). If no further requirement of the kick down control exists at the determination step (S22), the control target value of the engine rotational speed of the kick down mode calculated at the step (S21) is set to be the control target value of the engine rotational speed as it is (S26). If the further requirement of the kick down control exists at the step (S22), the control target value of the engine rotational speed is calculated based upon the kick down mode provided after the kick down control (S23). The processes discussed above are the same as the normal multistage kick down control.

As shown in FIG. 7, the second control 162 includes a determination step (S24). At the determination step (S24), it is determined whether or not the control target value of the engine rotational speed of the kick down mode which is calculated at the step (S23) and is provided after the kick down control is greater than the restriction value 143 in the throttle fully closed state. In other words, at this determination step (S24), it is determined whether or not the kick down mode provided after the kick down control sets the control target value of the continuously variable transmission 100 to the Low gear range more than the restriction value 143 given in the throttle fully closed state.

If, at the determination step (S24), it is determined that it is greater, a step (S25) is executed. At the step (S25), the kick down control is restricted. Then, the control target value of the engine rotational speed of the kick down mode that is executed at this moment is set to be the control target value of the engine rotational speed. That is, if it is determined to be YES at the determination step (S24), the kick down control in response to the operation of the kick down operator is restricted.

If it is determined at the determination step (S24) that it is not greater, step (S26) is executed. In this situation, at step (S26), the control target value of the engine rotational speed of the kick down mode 142 provided after the kick down operation is set to be the control target value of the engine rotational speed (S26). That is, if it is determined to be NO at the determination step (S24), the kick down control in response to the operation of the kick down operator is not restricted, and the kick down control in response to the operation of the kick down operator is made.

The second control restricts, for example, deceleration when the rider closes the throttle valve to decelerate the straddle type vehicle and further operates the kick down operator 132 continuously multiple times to make the engine brake action.

According to the second control 162, it is avoided that the control target value of the continuously variable transmission 100 is set to the Low gear range more than the restriction value 143 in the throttle fully closed state, by the kick down control, in the throttle fully closed state. Therefore, the continuously variable transmission 100 is controlled not to vary to the Low gear range more than the restriction value 143 given in the throttle fully closed state, and slippage between the primary sheave 102 and the V-belt 105 can be more surely reduced.

Hereunder, the control by the control device 107 in this embodiment will be specifically described.

In this embodiment, as shown in FIG. 5, the first mode 142a of the kick down is set to be in the Top gear range more than the restriction value 143 given in the throttle fully closed state, in a range of x1 through x6 (km/h). However, out of the range of x1 through x6 (km/h), the first mode 142a of the kick down is set to be in the Low gear range more than the restriction value 143 given in the throttle fully closed state.

The second mode 142b of the kick down is set to be in the Top gear range more than the restriction value 143 given in the throttle fully closed state, in a range of generally x2 through x5 (km/h). However, out of the range of generally x2 through x5 (km/h), the second mode 142b of the kick down is set to be in the Low gear range more than the restriction value 143 given in the throttle fully closed state.

The third mode 142c of the kick down is set to be in the Top gear range more than the restriction value 143 given in the throttle fully closed state, in a range of generally x3 through x4 (km/h) . However, out of the range of generally x3 through x4 (km/h), the third mode 142c of the kick down is set to be in the Low gear range more than the restriction value 143 given in the throttle fully closed state.

The fourth mode 142d and the fifth mode 142e of the kick down are set to be in the Low gear range more than the restriction value 143 given in the throttle fully closed state, in the entire range.

Also, in this embodiment, as shown in FIG. 5, the restriction value 143 given in the throttle fully closed state is set to be in the Top gear range more than the target values set by the kick down modes 142a through 142e provided in the throttle fully closed state at a vehicle speed slower than a preset vehicle speed (vehicle speed slower than a speed of x1 (km/h) in this embodiment).

For example, a situation is considered in which the normal mode 141 is executed, and the rider closes the throttle valve to decelerate from a condition under which the straddle type vehicle 1000 runs at a speed of x7 (km/h) between speeds of x5 and x6 and operates the kick down operator 132 continuously multiple times.

On this occasion, if the kick down modes (142a through 142e) executed by the kick down control are in the Low gear range more than the restriction values 143 given in the throttle fully closed state, the kick down control is restricted.

Specifically, when the normal mode 141 is executed and the kick down operator 132 is operated under the condition that the vehicle runs at the speed of x7 (km/h), the first mode 142a of the kick down executed by the kick down control is not in the Low gear range more than the restriction value 143 given in the throttle fully closed state. Therefore, the kick down control is executed as indicated by the arrow "a" without being restricted by the second control 162 and the first mode 142a of the kick down is executed.

Afterwards, when the first mode 142a of the kick down is executed, the second mode 142b of the kick down is in the Low gear range more than the restriction value 143 given in the throttle fully closed state, at a speed faster than the speed of x5 (km/h). Therefore, at any speeds faster than the speed of x5 (km/h), the kick down control from the first mode 142a to the second mode 142b is restricted by the second control 162 described above even though the kick down operator 132 is operated.

However, when the deceleration is further made and the vehicle speed is reduced to a speed slower than the speed of x5 (km/h), the second mode 142b of the kick down is no longer in the Low gear range more than the restriction value 143 given in the throttle fully closed state. Therefore, if the kick down operator 132 is operated, the kick down control from the first mode 142a to the second mode 142b is executed as indicated by the arrow "b" without being restricted by the second control 162.

Similarly, when the second mode 142b of the kick down is executed, the second mode 142b of the kick down is in the Low gear range more than the restriction value 143 in the throttle fully closed state, at a speed faster than the speed of x4 (km/h). Therefore, at any speeds faster than the speed of x4 (km/h), the kick down control from the second mode 142b to the third mode 142c is restricted by the second control 162 described above even though the kick down operator 132 is operated.

However, when the deceleration is further made and the vehicle speed is reduced to a speed slower than the speed of x4 (km/h), the third mode 142c of the kick down is no longer in the Low gear range more than the restriction value 143 given in the throttle fully closed state. Therefore, if the kick down operator 132 is operated, the kick down control from the second mode 142b to the third mode 142c is executed as indicated by the arrow c without being restricted by the second control 162.

As thus described, the respective kick down modes in the Low gear range are sequentially executed in response to the operation of the kick down operator 132. However, the fourth mode 142d and the fifth mode 142e of the kick down are set to be in the Low gear range more than the restriction value given in the throttle fully closed state, in the entire range. Therefore, the kick down control from the third mode 142c to the fourth mode 142d of the kick down is restricted by the second control 162 described above even though the kick down operator 132 is operated. Thus, in this embodiment, the straddle type vehicle 1000 is decelerated under the condition that the third mode 142c of the kick down is executed as indicated by the arrow "d."

Also, in this embodiment, the control device 107 controls the continuously variable transmission 100 based upon the restriction value 143 in the throttle fully closed state if the kick down mode 142 is in the Low gear range more than the restriction value 143 given in the throttle fully closed state when the first control 161 closes the throttle valve to decelerate the vehicle.

In the example discussed above, the straddle type vehicle 1000 is decelerated under the condition that the third mode 142c of the kick down is executed as indicated by the arrow "d," and, at the speed of x3 (km/h), the third mode 142c of the kick down is in the Low gear range more than the restriction value 143 given in the throttle fully closed state.

Therefore, when the vehicle is decelerated to be slower than the speed of x3 (km/h) under the condition that the third mode 142c of the kick down is executed, the continuously variable transmission 100 is compulsorily controlled by the first control 161 along the restriction values 143 given in the throttle fully closed state, as indicated by the arrow "e."

As thus described, under the condition that the throttle valve is closed to decelerate the vehicle, it is avoided that the continuously variable transmission 100 is controlled to be in the Low gear range more than the restriction value 143 given in the throttle fully closed state. Thereby, slippage between the primary sheave 102 and the V-belt 105 of the continuously variable transmission 100 made under the deceleration condition can be prevented.

Also, in this embodiment, the restriction value 143 given in the throttle fully closed state is set to be in the Top gear range more than the control target value set by the kick down modes 142a through 142e provided in the throttle fully closed state, at a speed slower than the speed of x1 (km/h). Thereby, it is avoided that the continuously variable transmission 100 is controlled without the kick down mode being executed, when the throttle valve is closed to decelerate, at the speed slower than the speed of x1 (km/h). Thereby, the continuously variable transmission is prevented from being shifted to the Low gear range at any speeds slower than the speed of x1 (km/h), and slippage of the belt can be prevented.

Additionally, the speed at which the restriction value 143 given in the throttle fully closed state is set to be in the Top gear range more than the kick down modes 142a through 142e provided in the throttle fully closed state is a speed suitable for restricting an extreme down shift movement which can be made when the throttle valve is closed to decelerate. Preferably, the restriction value 143 given in the throttle fully closed state is set to be in the Top gear range more than the kick down modes 142a through 142e provided in the throttle fully closed state.

As described above, in this embodiment, the target value setting section 140 that sets a control target value for controlling the continuously variable transmission has the restriction values 143 given in the throttle fully closed state. The continuously variable transmission 100 is controlled so that the target value is not in the Low gear range more than the associated restriction value 143, in the throttle fully closed state.

Specifically, the first control 161 restricts the target value when the kick down modes 142a through 142e set the control target value to be in the Low gear range more than the restriction value 143 given in the throttle fully closed state, in the throttle fully closed state. The first control 161 sets the control target value of the continuously variable transmission 100 along the restriction values 143 given in the throttle fully closed state and previously decided. Also, the second control 162 properly controls the kick down control to be executed in response to the operation of the kick down operator. That is, the second control 162 restricts the kick down control when the control target value set by the kick down mode executed in the kick down control is in the Low gear range more than the restriction value 143 given in the throttle fully closed state. Thereby, the continuously variable transmission 100 can be controlled so that the control target value of the continuously variable transmission 100 is not set to the Low gear range more than the restriction value given in the throttle fully closed state, in the throttle fully closed state. Because of such controls, slippage between the primary sheave 102 and the V-belt 105 made under the deceleration condition can be reduced.

Additionally, in the embodiment described above, the second control 162 can be modified as described below.

That is, in the embodiment described above, when the second control 162 restricts the kick down control, the kick down mode executed at the moment sets the control target value of the continuously variable transmission 100. Alternatively, when the second control 162 restricts the kick down control, the control target value of the continuously variable transmission 100 can be set along the restriction values 143 given in the throttle fully closed state.

Showing a control according to the modified example in FIG. 5, the control functions if the kick down operator is operated when the throttle valve is closed to decelerate the vehicle so that the speed thereof is generally slower than the speed x4 (km/h) under the condition, for example, that the third mode 142c of the kick down is executed. In the second control 162 described above, the kick down control is restricted and the third mode 142c of the kick down is continuously executed to make the control indicated by the arrow d. Contrary to the control, in the modified example, the control target value of the continuously variable transmission is set along the restriction value 143 given in the throttle fully closed state as indicated by the arrow "g". Thereby, the continuously variable transmission 100 can be controlled to be at the lowermost position in the Low gear range. The requirement of the shift down movement by the rider thus can be realized.

In this embodiment, as shown in FIG. 1 and as described above, the continuously variable transmission 100 has the clutch 113 (centrifugal clutch) that is disengaged at a preset speed. The inventors further found the following problem related to the controls discussed above.

In the normal mode 141a, generally, the continuously variable transmission 100 is controlled in a manner such that the extreme down shift movement causing slippage between the primary sheave 102 and the V-belt 105 is not made. Therefore, the restriction value 143 given in the throttle fully closed state, which is described above, is set to be in the Low gear range more than in the normal mode 141a provided in the throttle fully closed state.

If the vehicle runs in the normal mode when the throttle valve is closed to decelerate, the continuously variable transmission 100 is controlled in accordance with the normal mode 141a provided in the throttle fully closed state. To the contrary, if the vehicle runs in the kick down mode when the throttle valve is closed to decelerate, the first control 161 and the second control 162 are executed as discussed above. Therefore, at the speed where the clutch 113 is disengaged (in this embodiment, approximately 20km/h), the continuously variable transmission 100 is controlled along the restriction values 143 given in the throttle fully closed state.

Therefore, when the throttle valve is closed to decelerate, both the controls for the continuously variable transmission 100 and the engine brake actions are different between the situation in which the vehicle runs in the normal mode and the situation in which the vehicle runs in the kick down mode. Particularly, the engine brake action suddenly disappears at the moment the clutch 113 is disengaged.

Thus, if it is assumed that there is a large difference between the control target value set by the normal mode 141a provided in the throttle fully closed state and the restriction value 143 given in the throttle fully closed state in the vicinity of the moment at which the clutch 113 is disengaged, a great difference appears in the sense transferred to the rider when the clutch 113 is disengaged between the situation in which the vehicle runs in the kick down mode and the situation in which the vehicle runs in the normal mode.

Although such a difference of the sense does not particularly affect the safety and the running performance, the rider may feel unnecessary discomfort.

Thus, a modification may be made which eliminates the discomfort and enhances the ride feeling of the straddle type vehicle. The modification is also applied to the embodiment shown in FIG. 5.

That is, in the embodiment described above, as indicated by the arrow f of FIG. 5, the restriction value 143 given in the throttle fully closed state is set to be generally identical with the target value set by the normal mode 141a provided in the throttle fully closed state, in the vicinity of the vehicle speed at which the clutch 113 is disengaged (in this embodiment, approximately 20 km/h).

Thereby, both the control target values of the continuously variable transmission 100 are generally consistent with each other in the vicinity of the vehicle speed at which the clutch 113 is disengaged between the situation in which the vehicle runs in the kick down mode and the situation in which the vehicle runs in the normal mode 141. Therefore, the sense transferred to the rider when the clutch 113 is disengaged is always the same, and the rider does not feel any discomfort.

Additionally, the vehicle speed at which the clutch 113 is disengaged varies depending on models. Thus, preferably, the vehicle speed at which the restriction value 143 given in the throttle fully closed state is consistent with the control target value set by the normal mode 141a provided in the throttle fully closed state is properly adjusted. Also, it is preferred that the sense transferred to the rider when the clutch 113 is disengaged is always the same. Therefore, preferably, the restriction value 143 given in the throttle fully closed state is consistent with the control target value of the continuously variable transmission 100 set by the normal mode 141a provided in the throttle fully closed state at a vehicle speed at least between a vehicle speed which is slightly faster than the vehicle speed at which the clutch 113 is disengaged and the precise vehicle speed at which the clutch 113 is disengaged. Also, in this connection, it is satisfactory that the restriction value 143 given in the throttle fully closed state and the control target value of the continuously variable transmission 100 set by the normal mode 141a provided in the throttle fully closed state are consistent with each other to the extent that the sense transferred to the rider when the clutch 113 is disengaged is always the same.

In the above, the control device for the continuously variable transmission and the straddle type vehicle constructed in accordance with one embodiment of the present invention are described. However, the control device for the continuously variable transmission and the straddle type vehicle of the present invention are not limited to the embodiment discussed above.

The normal mode, the kick down mode and the restriction value given in the throttle fully closed state, all of which are set, are not limited to those exemplarily shown in FIG. 5. For example, as the kick down mode, the multistage kick down mode, specifically five-stage kick down mode, is exemplarily shown. The multistage kick down mode, however, can have numbers other than five. Also, the first control 161 and the second control 162 discussed above can be applied to cases other than the multistage kick down mode.

Also, in the embodiment described above, the kick down mode that is set by multiplying the gear shift characteristic (gear ratio) of the normal mode by a constant rate is exemplarily shown. However, the setting of the kick down mode is not limited to the example.

In the embodiment described above, it is determined whether or not the kick down mode is in the Low gear range more than the restriction value given in the throttle fully closed state, referring to the control target value of the engine rotational speed. However, the determination as to whether or not the kick down mode is in the Low gear range more than the restriction value given in the throttle fully closed state is not limited to the above determination. For example, it can be determined whether or not the kick down mode is in the Low gear range than the restriction value given in the throttle fully closed state, referring to a control target value of the gear ratio of the continuously variable transmission set in the kick down mode and a control target value of the gear ratio of the continuously variable transmission set with the restriction value given in the throttle fully closed state.

Also, some straddle type vehicles have two target value setting programs, i.e., a drive mode and an assist mode, as the normal mode, other than the kick down mode. The drive mode is a mode provided in consideration of fuel economy or the like, while the assist mode is the so-called sports mode in which the gear ratio is set to be in the Low gear range in comparison with the drive mode. In this case, the kick down mode can be additionally set in each of the drive mode and the assist mode. In such a case, slippage between the primary sheave 102 and the V-belt 105 of the continuously variable transmission are also avoidable by providing the restriction value 143 given in the throttle fully closed state, which has been described above.

Alternatively, the restriction value given in the throttle fully closed state can be, for example, a restriction value given in the throttle fully closed state which is previously decided and stored. Further alternatively, a predetermined target value setting program (hereunder, called "restriction mode provided in the throttle fully closed state") which controls the continuously variable transmission along the restriction values given in the throttle fully closed state can be set. In this alternative, the target value setting program (restriction mode provided in the throttle fully closed state) is preferably executed when the continuously variable transmission is controlled along the restriction values given in the throttle fully closed state previously decided.

Although, as the straddle type vehicle, a scooter type motorcycle is exemplarily shown, the straddle type vehicle is not limited to such a vehicle. The vehicle to which the continuously variable transmission of the present invention is mounted is not limited to only the straddle type vehicles. The continuously variable transmission of the present invention can be mounted to vehicles such as an SSV (side by side vehicle) having seats for two riders.

The structure of the continuously variable transmission is not limited to the embodiment described above, and is applicable to various continuously variable transmissions having the configuration in which the V-belt is wound around the primary sheave and the secondary sheave and the groove width of the primary sheave is adjusted by the actuator and the control device.

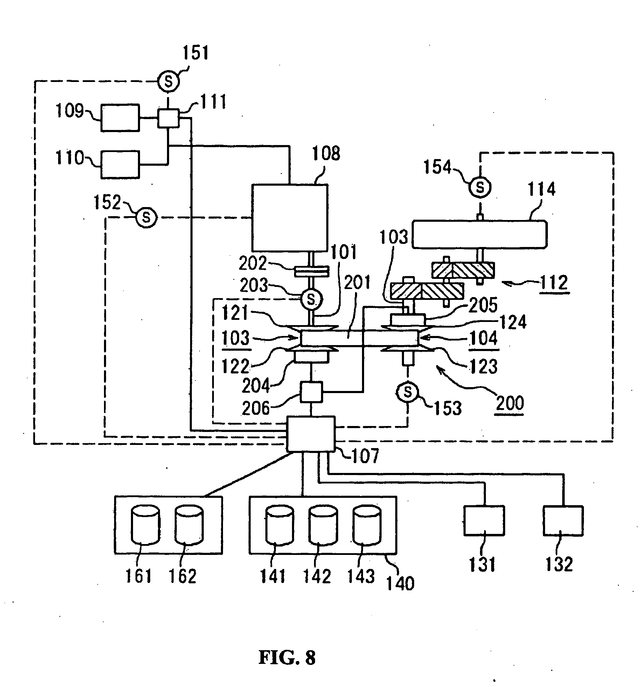

As one of such continuously variable transmissions, for example, as shown in FIG. 8, a continuously variable transmission whose V-belt is made of a metal belt is applicable. Additionally, in FIG. 8, members or portions which make the same actions as those of the continuously variable transmission depicted in FIG. 1 are assigned with the same reference numerals.

In this embodiment, a continuously variable transmission 200 whose V-belt is made of a metal belt (hereunder, properly called "metallic belt CVT") has, as shown in FIG. 8, various modifications other than that the V-belt 201 is made of metal.

The metallic belt CVT 200 has a clutch 202, a primary rotation sensor 203, hydraulic cylinders 204, 205 and a hydraulic pressure control valve 206.

The clutch 202 is disposed between the output shaft of the engine 108 and the input shaft of the metallic belt CVT 200. The transmission of power is intercepted or permitted at a location between the output shaft of the engine 108 and the input shaft of the metallic belt CVT 200.

Next, the primary rotation sensor 203 detects a rotational speed of the primary sheave 103. In this embodiment, the control device 107 calculates a gear ratio of the continuously variable transmission 200 as a ratio of the rotational speed of the primary sheave 103 detected by the primary rotation sensor 203 to the vehicle speed of the straddle type vehicle 1000 detected by the vehicle speed sensor 154. Additionally, the gear ratio of the continuously variable transmission 200 can be calculated as a ratio of the rotational speed of the primary sheave 103 detected by the primary rotation sensor 203 to the rotational speed of the secondary sheave 104 detected by the secondary sheave rotational speed sensor 153.

Next, the hydraulic cylinder 204 adjusts a groove width of the primary sheave 103. In this embodiment, the hydraulic cylinder 204 provides the movable flange 122 with pressing force to adjust the groove width of the primary sheave 103. The hydraulic cylinder 205 adjusts a groove width of the secondary sheave 104. In this embodiment, the hydraulic cylinder 205 provides the movable flange 124 with pressing force to adjust the groove width of the secondary sheave 104. The hydraulic pressure control valve 206 is a valve adjusting a hydraulic pressure provided to the hydraulic cylinders 204, 205. When the hydraulic pressure of either one hydraulic cylinder 204 (205) of the hydraulic cylinders 204, 205 is to be raised, the hydraulic pressure control valve 206 controls the hydraulic pressure so that the hydraulic pressure of the other hydraulic cylinder 205 (204) is lowered. The hydraulic pressure 206 is controlled by the control device 107.

In this metallic belt CVT 200, the gear ratio of the metallic belt CVT 200 is changed by operating the hydraulic control valve 206 by the control device 107 in accordance with the control target value that is set. Regarding controls by the control device 107, the same controls as those of the continuously variable transmission 100 are made. Additionally, in the metallic belt CVT 200 of this embodiment, the control device 107 uses the rotational speed of the primary sheave 103 as the control target value instead of use of the engine speed as the control target value.

As described above, the belt type continuously variable transmission according to the present invention can be widely used as a belt type continuously variable transmission for a straddle type vehicle.

### Description of Reference Numerals and Symbols

100: continuously variable transmission
101: primary shaft
102: primary sheave
103: secondary shaft
104: secondary sheave
105: V-belt
106: motor
107: control device
108: engine
111: throttle valve
112: speed reduction mechanism
113: clutch
114: drive wheel
131: acceleration operator
132: kick down operator
140: target value setting section
141: normal mode
142: kick down mode
142a: first mode of kick down
142b: second mode of kick down
142c: third mode of kick down
142d: fourth mode of kick down
142e: fifth mode of kick down
143: restriction value given in throttle fully closed state
151: throttle opening sensor
152: engine rotation sensor
153: secondary sheave rotation sensor
154: vehicle speed sensor
161: first control
162: second control
200: continuously variable transmission (metallic belt CVT)
201: V-belt
202: clutch
203: primary rotation sensor
204, 205: hydraulic cylinder
206: hydraulic pressure control valve
1000: straddle type vehicle

## Claims

1. A continuously variable transmission (100) comprising:
a control device (107) adapted to be coupled to a throttle (111) and to control the gear ratio of the continuously variable transmission (100) according to a control target valve, wherein the control device (107) comprises:
a normal mode (141) in which the control target value is set,
a kick down mode (142) in which the control target value is set to be in a Low gear range more than in the normal mode (141), and
a kick down operator (132) coupled to the control device (107),
wherein the control device (107) controls the continuously variable transmission (100) based upon the kick down mode (142) in response to an operation of the kick down operator (132); and is **characterised in that** it further comprises a restriction value (143) as a control target value in a throttle fully closed state
and wherein, when an associated throttle (111) is in a fully closed state, the control device (107) controls the continuously variable transmission (100) not to vary to a Low gear range more than the restriction value (143),
and further wherein, when an associated throttle (111) is in a fully closed state, and when the kick down mode (142) sets the control target value to the Low gear range more than the restriction value (143), the control device (107) controls the continuously variable transmission (100) along the restriction value (143).

2. The continuously variable transmission (100) according to Claim 1, further comprising a clutch (113) which is disengaged at a preset speed, wherein the restriction value (143) is set to be identical with the control target value set by the normal mode (141) in the throttle fully closed state, in the vicinity of a vehicle speed at which the clutch (113) is disengaged.

3. The continuously variable transmission (100) according to Claim 1 or 2, wherein the kick down mode (142) comprises multiple stages (142a-142e) at which control target values are sequentially set at Low gear positions lower than that in the normal mode (141).

4. The continuously variable transmission (100) according to Claim 3, wherein the control device (107) is adapted to make a kick down control in which each stage (142a-142e) of the kick down mode (142) is set at one of the Low gear positions in the multiple stages (142a-142e) of the kick down mode (142) in response to the operation of the kick down operator (132).

5. The continuously variable transmission (100) according to Claim 4, wherein, when an associated throttle (111) is in a fully closed state, the control device (107) restricts the kick down control when the control target value set by the kick down mode (142) executed by the kick down control exists in a Low gear range more than the restriction value (143).

6. The continuously variable transmission (100) according to Claim 4 or 5 wherein, when an associated throttle (111) is in a fully closed state, and when the control target value set by the kick down mode (142) executed by the kick down control exists in a Low gear range more than the restriction value (143), the control device (107) restricts the kick down control and the gear ratio of the continuously variable transmission (100) is controlled along the restriction value (143).

7. A vehicle (1000) comprising:
an engine (108);
an acceleration operator (131) adapted to control the output of the engine (108);
a continuously variable transmission (100) according to claim 1 and connected to the engine (108); wherein the kick down operator (132) is provided separately from the acceleration operator (131).

8. The vehicle (1000) according to Claim 7, wherein, when an associated throttle (111) is in a fully closed state, the restriction value (143) is set to be in a Top gear range more than the control target value set by the kick down mode (142), at a vehicle speed slower than a preset vehicle speed.

9. The vehicle (1000) according to Claim 7 or 8, further comprising a clutch (113) which is disengaged at a preset speed, wherein the restriction value (143) is set to be identical with the control target value set in the normal mode (141) in the throttle fully closed state, in the vicinity of a vehicle speed at which the clutch (113) is disengaged.

10. The vehicle (1000) according to any one of Claims 7 through 9, wherein the kick down mode (142) comprises multiple stages (142a-142e) at which control target values are sequentially set at Low gear positions lower than that in the normal mode (141).

11. The vehicle (1000) according to Claim 10, wherein the control device (107) is adapted to make a kick down control in which each stage (142a-142e) of the kick down mode (142) is set at one of the Low gear positions in the multiple stages (142a-142e) of the kick down mode (142) in response to the operation of the kick down operator (132).

12. The vehicle (1000) according to claim 10 or 11, wherein, when an associated throttle (111) is in a fully closed state, the control device (107) restricts the kick down control when the control target value set by the kick down mode (142) executed by the kick down control exists in a Low gear range more than the restriction value (143).

13. The vehicle (1000) according to Claim 11 or 12, wherein, when an associated throttle (111) is in a fully closed state, and when the control target value set by the kick down mode (142) executed by the kick down control exists in a Low gear range more than the restriction value (143), the control device (107) restricts the kick down control and the gear ratio of the continuously variable transmission (100) is controlled along the restriction value (143).

## Patentansprüche

1. Stufenlos verstellbares Getriebe (100), das aufweist:
eine Steuervorrichtung (107), die so ausgebildet ist, dass sie mit einer Drosselklappe (111) gekuppelt werden kann, und dass sie das Übersetzungsverhältnis des stufenlos verstellbaren Getriebes (100) entsprechend einem Steuerzielwert steuert, wobei die Steuervorrichtung (107) aufweist:
eine normale Betriebsweise (141), auf die der Steuerzielwert eingestellt wird;
eine Kickdown-Betriebsweise (142), bei der der Steuerzielwert in einen niedrigen Gangbereich eingestellt wird, mehr als bei der normalen Betriebsweise (141); und
ein Kickdown-Betätigungselement (132), das mit der Steuervorrichtung (107) gekuppelt ist,
wobei die Steuervorrichtung (107) das stufenlos verstellbare Getriebe (100) basierend auf der Kickdown-Betriebsweise (142) als Reaktion auf eine Betätigung des Kickdown-Betätigungselementes (132) steuert; und
**dadurch gekennzeichnet, dass** sie außerdem einen Drosselwert (143) als einen Steuerzielwert in einem vollständig geschlossenen Zustand der Drosselklappe aufweist;
und wobei, wenn eine dazugehörende Drosselklappe (111) in einem vollständig geschlossenen Zustand ist, die Steuervorrichtung (107) das stufenlos verstellbare Getriebe (100) steuert, damit es sich nicht zu einem niedrigen Gangbereich verändert, mehr als der Drosselwert (143);
und wobei außerdem, wenn eine dazugehörende Drosselklappe (111) in einem vollständig geschlossenen Zustand ist, und wenn die Kickdown-Betriebsweise (142) den Steuerzielwert in den niedrigen Gangbereich einstellt, mehr als der Drosselwert (143), die Steuervorrichtung (107) das stufenlos verstellbare Getriebe (100) mit dem Drosselwert (143) steuert.

2. Stufenlos verstellbares Getriebe (100) nach Anspruch 1, das außerdem eine Kupplung (113) aufweist, die bei einer voreingestellten Geschwindigkeit ausgerückt wird, wobei der Drosselwert (143) so eingestellt wird, dass er mit dem Steuerzielwert identisch ist, der mittels der normalen Betriebsweise (141) im vollständig geschlossenen Zustand der Drosselklappe eingestellt wird, in der Nähe einer Fahrzeuggeschwindigkeit, bei der die Kupplung (113) ausgerückt wird.

3. Stufenlos verstellbares Getriebe (100) nach Anspruch 1 oder 2, bei dem die Kickdown-Betriebsweise (142) mehrere Stufen (142a-142e) aufweist, bei denen die Steuerzielwerte sequentiell auf niedrige Gangpositionen eingestellt werden, niedriger als die bei der normalen Betriebsweise (141).

4. Stufenlos verstellbares Getriebe (100) nach Anspruch 3, bei dem die Steuervorrichtung (107) ausgebildet ist, um eine Kickdown-Steuerung vorzunehmen, wobei eine jede Stufe (142a-142e) der Kickdown-Betriebsweise (142) in eine der niedrigen Gangpositionen bei den mehreren Stufen (142a-142e) der Kickdown-Betriebsweise (142) als Reaktion auf die Betätigung des Kickdown-Betätigungselementes (132) eingestellt wird.

5. Stufenlos verstellbares Getriebe (100) nach Anspruch 4, bei dem, wenn eine dazugehörende Drosselklappe (111) in einem vollständig geschlossenen Zustand ist, die Steuervorrichtung (107) die Kickdown-Steuerung einschränkt, wenn der Steuerzielwert, der durch die Kickdown-Betriebsweise (142) eingestellt wird, ausgeführt durch die Kickdown-Steuerung, in einem niedrigen Gangbereich vorhanden ist, mehr als der Drosselwert (143).

6. Stufenlos verstellbares Getriebe (100) nach Anspruch 4 oder 5, bei dem, wenn eine dazugehörende Drosselklappe (111) in einem vollständig geschlossenen Zustand ist, und wenn der Steuerzielwert, der durch die Kickdown-Betriebsweise (142) eingestellt wird, ausgeführt durch die Kickdown-Steuerung, in einem niedrigen Gangbereich vorhanden ist, mehr als der Drosselwert (143), die Steuervorrichtung (107) die Kickdown-Steuerung einschränkt, und das Übersetzungsverhältnis des stufenlos verstellbaren Getriebes (100) mit dem Drosselwert (143) gesteuert wird.

7. Fahrzeug (1000), das aufweist:
einen Motor (108);
ein Beschleunigungsbetätigungselement (131), das ausgebildet ist, um die Leistung des Motors (108) zu steuern;
ein stufenlos verstellbares Getriebe (100) nach Anspruch 1 und mit dem Motor (108) verbunden; wobei
das Kickdown-Betätigungselement (132) separat vom Beschleunigungsbetätigungselement (131) bereitgestellt wird.

8. Fahrzeug (1000) nach Anspruch 7, bei dem, wenn sich eine dazugehörende Drosselklappe (111) in einem vollständig geschlossenen Zustand befindet, der Drosselwert (143) in einen höchsten Gangbereich eingestellt wird, mehr als der Steuerzielwert, der durch die Kickdown-Betriebsweise (142) eingestellt wird, bei einer Fahrzeuggeschwindigkeit, die langsamer ist als eine voreingestellte Fahrzeuggeschwindigkeit.

9. Fahrzeug (1000) nach Anspruch 7 oder 8, das außerdem eine Kupplung (113) aufweist, die bei einer voreingestellten Geschwindigkeit ausgerückt wird, wobei der Drosselwert (143) so eingestellt wird, dass er mit dem Steuerzielwert identisch ist, der in der normalen Betriebsweise (141) im vollständig geschlossenen Zustand der Drosselklappe eingestellt wird, in der Nähe einer Fahrzeuggeschwindigkeit, bei der die Kupplung (113) ausgerückt wird.

10. Fahrzeug (1000) nach einem der Ansprüche 7 bis 9, bei dem die Kickdown-Betriebsweise (142) mehrere Stufen (142a-142e) aufweist, bei denen die Steuerzielwerte sequentiell auf niedrige Gangpositionen eingestellt werden, niedriger als die bei der normalen Betriebsweise (141).

11. Fahrzeug (1000) Anspruch 10, bei dem die Steuervorrichtung (107) ausgebildet ist, um eine Kickdown-Steuerung vorzunehmen, wobei eine jede Stufe (142a-142e) der Kickdown-Betriebsweise (142) in eine der niedrigen Gangpositionen bei den mehreren Stufen (142a-142e) der Kickdown-Betriebsweise (142) als Reaktion auf die Betätigung des Kickdown-Betätigungselementes (132) eingestellt wird.

12. Fahrzeug (1000) nach Anspruch 10 oder 11, bei dem, wenn eine dazugehörende Drosselklappe (111) in einem vollständig geschlossenen Zustand ist, die Steuervorrichtung (107) die Kickdown-Steuerung einschränkt, wenn der Steuerzielwert, der durch die Kickdown-Betriebsweise (142) eingestellt wird, ausgeführt durch die Kickdown-Steuerung, in einem niedrigen Gangbereich vorhanden ist, mehr als der Drosselwert (143).

13. Fahrzeug (1000) nach Anspruch 11 oder 12, bei dem, wenn eine dazugehörende Drosselklappe (111) in einem vollständig geschlossenen Zustand ist, und wenn der Steuerzielwert, der durch die Kickdown-Betriebsweise (142) eingestellt wird, ausgeführt durch die Kickdown-Steuerung, in einem niedrigen Gangbereich vorhanden ist, mehr als der Drosselwert (143), die Steuervorrichtung (107) die Kickdown-Steuerung einschränkt, und das Übersetzungsverhältnis des stufenlos verstellbaren Getriebes (100) mit dem Drosselwert (143) gesteuert wird.

## Revendications

1. Transmission à variation continue (100), comprenant:
un dispositif de commande (107), adapté pour être accouplé à un papillon des gaz (111) et pour contrôler le rapport de multiplication de la transmission à variation continue (100) en fonction d'une valeur de commande cible, le dispositif de commande (107) comprenant :
un mode normal (141), dans lequel la valeur de commande cible est ajustée ;
un mode de rétrogradation (142), dans lequel la valeur de commande cible est ajustée de sorte à se situer dans une gamme de vitesses inférieures à celles existant dans le mode normal (141) ; et
un opérateur de rétrogradation (132) accouplé au dispositif de commande (107) ;
le dispositif de commande (107) assurant la commande de la transmission à variation continue (100) sur la base du mode de rétrogradation (142), en réponse à un actionnement de l'opérateur de rétrogradation (132) ; et
**caractérisée en ce qu'**elle comprend en outre une valeur de restriction (143), constituant une valeur de commande cible dans un état où le papillon des gaz est entièrement fermé ;
et dans laquelle, lorsqu'un papillon des gaz associé (111) se trouve dans un état complètement fermé, le dispositif de commande (107) contrôle la transmission à variation continue (100) de sorte à ne pas passer vers une gamme de vitesses inférieures à la valeur de restriction (143) ;
et dans laquelle, lorsqu'un papillon des gaz associé (111) se trouve dans un état complètement fermé, le mode de rétrogradation (142) ajustant la valeur de commande cible à une gamme de vitesses réduites, supérieures à la valeur de restriction (143), le dispositif de commande (107) contrôle la transmission à variation continue (100) le long de la valeur de restriction (143).

2. Transmission à variation continue (100) selon la revendication 1, comprenant en outre un embrayage (113) qui est désaccouplé en présence d'une vitesse prédéterminée, la valeur de restriction (143) étant ajustée de sorte à être identique à la valeur de commande cible ajustée par le mode normal (141) dans l'état complètement fermé du papillon des gaz, au voisinage d'une vitesse du véhicule en présence de laquelle l'embrayage (113) est désaccouplé.

3. Transmission à variation continue (100) selon les revendications 1 ou 2, dans laquelle le mode de rétrogradation (142) comprend de multiples stades (142a-142e) au niveau desquels les valeurs de commande cibles sont ajustées de manière séquentielle à des positions de vitesse réduite, inférieure à celle existant dans le mode normal (141).

4. Transmission à variation continue (100) selon la revendication 3, dans laquelle le dispositif de commande (107) est adapté pour effectuer une commande de rétrogradation, dans laquelle chaque stade (142a-142e) du mode de rétrogradation (142) est ajusté au niveau de l'une des positions de vitesse réduite dans les multiples stades (142a-142e) du mode de rétrogradation (142), en réponse à l'actionnement de l'opérateur de rétrogradation (132).

5. Transmission à variation continue (100) selon la revendication 4, dans laquelle, lorsqu'un papillon des gaz associé (111) se trouve dans un état complètement fermé, le dispositif de commande (107) limite la commande de rétrogradation lorsque la valeur de commande cible ajustée par le mode de rétrogradation (142), exécuté par la commande de rétrogradation, se situe dans une gamme de vitesses réduites supérieures à la valeur de restriction (143).

6. Transmission à variation continue (100) selon les revendications 4 ou 5, dans laquelle, lorsqu'un papillon des gaz associé (111) se trouve dans un état complètement fermé, et lorsque la valeur de commande cible ajustée par le mode de rétrogradation (142), exécuté par la commande de rétrogradation, se situe dans une gamme de vitesses réduites, supérieures à la valeur de restriction (143), le dispositif de commande (107) limite la commande de rétrogradation, le rapport de multiplication de la transmission à variation continue (100) étant contrôlé le long de la valeur de restriction.

7. Véhicule (1000), comprenant :
un moteur (08) ;
un opérateur d'accélération (131), adapté pour contrôler la puissance du moteur (108) ;
une transmission à variation continue (100) selon la revendication 1, connectée au moteur (108), dans lequel
l'opérateur de rétrogradation (132) est agencé séparément de l'opérateur d'accélération (131).

8. Véhicule (1000) selon la revendication 7, dans lequel, lorsqu'un papillon des gaz associé (111) se trouve dans un état complètement fermé, la valeur de restriction (143) est ajustée de sorte à se situer dans une gamme de vitesses supérieures, supérieures à la valeur de commande cible ajustée par le mode de rétrogradation (142), en présence d'une vitesse du véhicule inférieure à une vitesse prédéterminée du véhicule.

9. Véhicule (1000) selon les revendications 7 ou 8, comprenant en outre un embrayage (113), désaccouplé en présence d'une vitesse prédéterminée, dans lequel une valeur de restriction (143) est ajustée de sorte à être identique à la valeur de commande cible ajustée dans le mode normal (141), dans l'état complètement fermé du papillon des gaz, au voisinage d'une vitesse du véhicule en présence de laquelle l'embrayage (113) est désaccouplé.

10. Véhicule (1000) selon l'une quelconque des revendications 7 à 9, dans lequel le mode de rétrogradation (142) comprend de multiples stades (142a-142e), au niveau desquels les valeurs de commande cibles sont ajustées de manière séquentielle à des positions de vitesse réduite, inférieure à celle existant dans le mode normal (141).

11. Véhicule (1000) selon la revendication 10, dans lequel le dispositif de commande (107) est adapté pour effectuer une commande de rétrogradation, dans laquelle chaque stade (142a-142e) du mode de rétrogradation (142) est ajustée à l'une des positions de vitesse réduite dans les multiples stades (142a-142e) du mode de rétrogradation (142), en réponse à l'actionnement de l'opérateur de rétrogradation (132).

12. Véhicule (1000) selon les revendications 10 ou 11, dans lequel, lorsqu'un papillon des gaz associé (111) se trouve dans un état complètement fermé, le dispositif de commande (107) limite la commande de rétrogradation lorsque la valeur de commande cible ajustée par le mode de rétrogradation (142), exécuté par la commande de rétrogradation, se situe dans une gamme de vitesses réduites, supérieures à la valeur de restriction (143).

13. Véhicule (1000) selon les revendications 11 ou 12, dans lequel, lorsqu'un papillon des gaz associé (111) se trouve dans un état complètement fermé, et lorsque la valeur de commande cible ajustée par le mode de rétrogradation (142), exécuté par la commande de rétrogradation, se situe dans une gamme de vitesses réduites, supérieures à la valeur de restriction (143), le dispositif de commande (107) limite la commande de rétrogradation, le rapport de multiplication de la transmission à variation continue (100) étant contrôlé le long de la valeur de restriction (143).
